# EUROPÄISCHE PATENTSCHRIFT

(11) **EP 1 348 397 B1**
(45) Veröffentlichungstag und Bekanntmachung des Hinweises auf die Patenterteilung: **17.05.2006**
(21) Anmeldenummer: 03100784.2
(22) Anmeldetag: 26.03.2003
(51) Int. Cl.: A61C 7/00

(54) **Vorrichtung zur Behebung der Fehlstellung von Zähnen**
Device for correcting the malocclusion of teeth
Dispositif pour corriger la malocclusion de dents

(30) Priorität: 26.03.2002 DE 10213597
(43) Veröffentlichungstag der Anmeldung: 01.10.2003
(73) Patentinhaber: Muchitsch, Alfred, 8010 Graz (AT)
(72) Erfinder: Muchitsch, Alfred, 8010 Graz (AT)
(74) Vertreter: KLIMENT & HENHAPEL

(56) Entgegenhaltungen:
- WO-A-01/39688
- US-A- 4 292 025
- US-A- 4 609 349

## Beschreibung

Die vorliegende Erfindung bezieht sich auf eine Vorrichtung zur Behebung einer Fehlstellung eines oder mehrerer Zähne bzw. Zahngruppen, sowie auf ein Verfahren zur Herstellung einer solchen Vorrichtung.

Eine solche Vorrichtung wird allgemein auch orthodontische Apparatur genannt. Die heute gebräuchlichen orthodontischen Apparatesysteme lassen sich grundsätzlich in zwei große Gruppen teilen: die festsitzenden und die herausnehmbaren Apparaturen.

Festsitzende Apparaturen sind während der Behandlung permanent im Mund fixiert und durch sogenannte Brackets gekennzeichnet. Dabei handelt es sich im Prinzip um auf die Zahnkronen geklebte Plättchen aus verschiedenen Materialien und Konfigurationen oder um zementierte Bänder (= Metallringe) mit aufgeschweißten Brackets. Durch Schlitze in den Brackets, die parallel zum Zahnbogen verlaufen, werden Kraft und Moment übertragende Drahtbögen geführt, an denen die Zähne (mit vielen anderen Zusatzmechanismen) in jeder Raumebene bewegt werden können. Nachteilig bei diesen festsitzenden Apparaturen hat sich jedoch herausgestellt, dass die Mundhygiene nur erschwert stattfinden kann, wodurch sich als Folge eine erhöhte Gefahr von Karies- und Paradontalschäden ergibt. Weitere Nachteile sind der erhöhte Arbeits- und Zeitaufwand am Patientenstuhl, die oft reduzierte Ästhetik, sowie die Notwendigkeit, häufig unerwünschte Nebenwirkungen der Behandlungsmechanik kompensieren zu müssen.

Herausnehmbare Apparaturen sind, wie der Name sagt, durch die jederzeitige Entfernbarkeit der Geräte gekennzeichnet. Eine große Vielfalt verschiedener Konstruktionen wie Kunststoffplatten mit einpolymerisierten Schrauben wie beispielsweise aus der DE 27 22 515 B2 bekannt bzw. Drahtbügeln für verschiedene Zahn- und Kieferbewegungen wie beispielsweise aus der US 4,609,349 bekannt und elastische oder teilelastische Systeme, die nach dem Positionerprinzip arbeiten, gehören zu dieser Gruppe. Als nachteilig hat sich besonders die eingeschränkte Zahnbewegungsmöglichkeit herausgestellt. Da herausnehmbare Apparaturen lediglich das Aufbringen von Kräften, nicht aber das Aufbringen von Drehmomenten auf die Zähne ermöglichen, sind Zahnbewegungen wie z.B. Translationen (=körperliche Bewegungen unter Beibehaltung der Achsenrichtung), Torques (Bewegungen der Zahnwurzel um einen Drehpunkt im Bereich der Zahnkrone), Rotationen etc. nicht möglich. Weiters sind herausnehmbare Apparaturen (z.B. Plattensysteme) gegenüber festsitzenden Apparaturen weniger präzise und kontrolliert und es können lediglich Fehlstellungen geringeren bis mittleren Ausmaßes korrigiert werden. Schwere Fehlstellungen können mit dieser bekannten Methode nicht korrigiert werden. Die Behandlungsdauer mit abnehmbarer Apparaturen ist im Vergleich zu festsitzenden Apparaturen relativ lange.

Es ist daher die Aufgabe der vorliegenden Erfindung, diese Nachteile zu vermeiden und eine Vorrichtung der eingangs erwähnten Art sowie ein Verfahren zur Herstellung einer solchen Vorrichtung vorzuschlagen, welche eine exakte Vorgabe und Umsetzung jeder gewünschten Zahnstellung ermöglichten. Es ist eine weitere Aufgabe der vorliegenden Erfindung, Nebenwirkungen und Beeinträchtigungen der nicht zu bewegenden Zähne weitgehend hintanzuhalten und eine ästhetische Vorrichtung zur Behebung einer Fehlstellung eines oder mehrerer Zähne bzw. Zahngruppen vorzuschlagen. Eine weitere Aufgabe der vorliegenden Erfindung ist es, bestmögliche Hygienemöglichkeiten für den Patienten zu schaffen, sowie den Arbeits- und Zeitaufwand am Patientenstuhl gering zu halten.

Erfindungsgemäß wird dies durch die kennzeichnenden Merkmale des Anspruchs 1 bzw. des Anspruchs 11 ermöglicht.

Dadurch ist es möglich, die exakte Sollstellung des fehlgestellten Zahnes bzw. der fehlgestellten Zähne vorzugeben. Durch die elastische Befestigung des Korrekturteils an der Basisverankerung sind dreidimensionale sowohl körperliche als auch nicht körperliche Zahnbewegungen aller Art, wie Mesialisierungen, Distalisierungen, Kippungen, Torquebewegungen, Rotationen, Intrusionen, Extrusionen, Aufrichtungen, etc. möglich. Die Zahnbewegungen können einzeln oder simultan in beliebiger Kombination und Reihenfolge vorgenommen werden. Es kann unter physiologischen Bedingungen jedes gewünschte Bewegungsausmaß erreicht werden. Es können Einzelzähne sowie Zahngruppen bewegt werden.

Die kennzeichnenden Merkmale des Anspruchs 2 beschreiben eine besonders bevorzugte Ausführungsmöglichkeit der Basisverankerung und des Korrekturteils.

Durch die kennzeichnenden Merkmale des Anspruchs 3 und 4 können die auf den fehlgestellten Zahn bzw. die fehlgestellten Zähne einwirkenden Kräfte sehr exakt eingestellt und dosiert werden. Die gewählten Materialen sind außerdem lebensmittelecht und können daher ohne weiteres auch über längere Zeiträume im Mund behalten werden.

Durch die kennzeichnenden Merkmale des Anspruchs 5 können die elastischen Verbindungselemente an der Basisverankerung und am Korrekturteil über Klemmplättchen einfach befestigt werden.

Durch die kennzeichnenden Merkmale der Ansprüche 6 und 7 beschreiben eine bevorzugte Implementierung der Klemmplättchen in die erfindungsgemäße Vorrichtung.

Die kennzeichnenden Merkmale der Ansprüche 8 bis 10 beschreiben einen einfachen Aufbau der Klemmplättchen.

Die kennzeichnenden Merkmale der Ansprüche 11 und 14 beschreiben ein Verfahren zur Herstellung einer Vorrichtung wie oben beschrieben, wobei gemäß Anspruch 13 die Kaufläche der Vorrichtung mit einer Beschichtung, vorzugsweise einer Kunststoffbeschichtung versehen wird, um die gewünschte Okklusion einschleifen zu können.

Im Anschluß erfolgt nun eine detaillierte Beschreibung der Erfindung. Dabei zeigt:
- Fig.1: einen Oberkiefer mit fehlgestelltem Zahnbestand
- Fig.2: eine erfindungsgemäße Vorrichtung
- Fig.3: einen Oberkiefer mit einem fehlgestellten Zahn samt applizierter erfindungsgemäßer Vorrichtung
- Fig.4: ein Klemmplättchen
- Fig.5: ein Modell eines Kiefers mit fehlgestelltem Zahnbestand
- Fig.6: ein Modell eines Kiefers mit korrigiertem Zahnbestand (=Set up Modell)

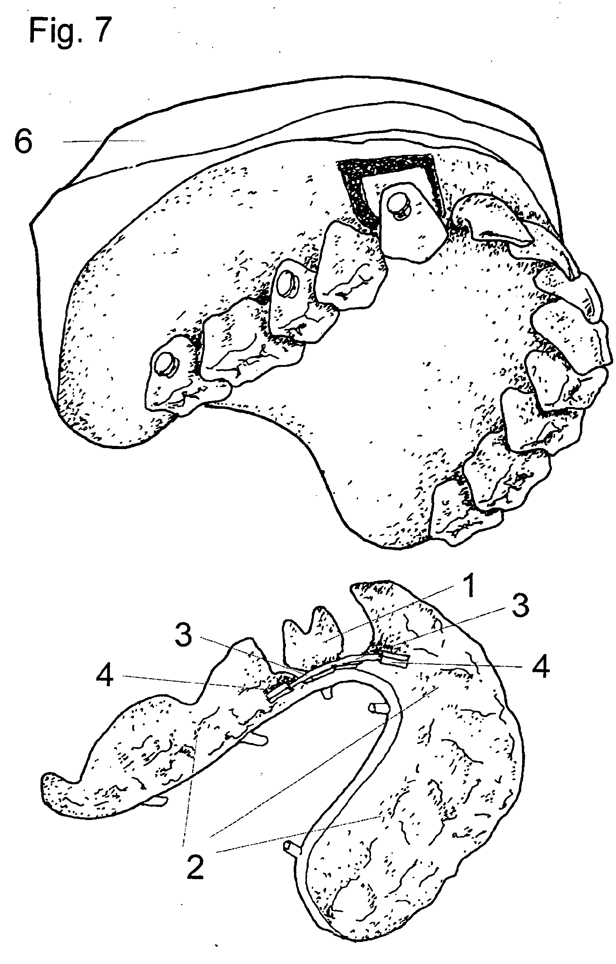

- Fig.7: ein Set up Modell mit aufzusetzender erfindungsgemäßer Vorrichtung
- Fig.8: an Basisverankerung und Korrekturteil befestigte Klemmplättchen mit elastischem Verbindungselement
- Fig.9a,9b: Querschnitte elastischer Verbindungselemente

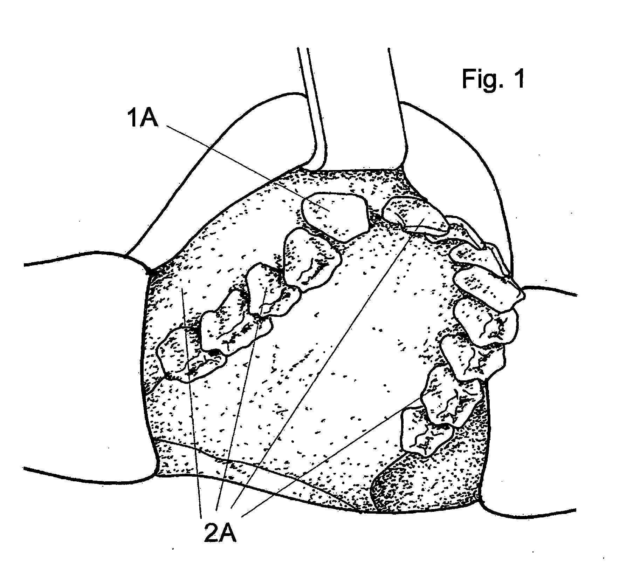

Fig.1 zeigt einen menschlichen Oberkiefer mit fehlgestelltem Zahnbestand 1A und dem restlichen Zahnbogen und Kiefer 2A.

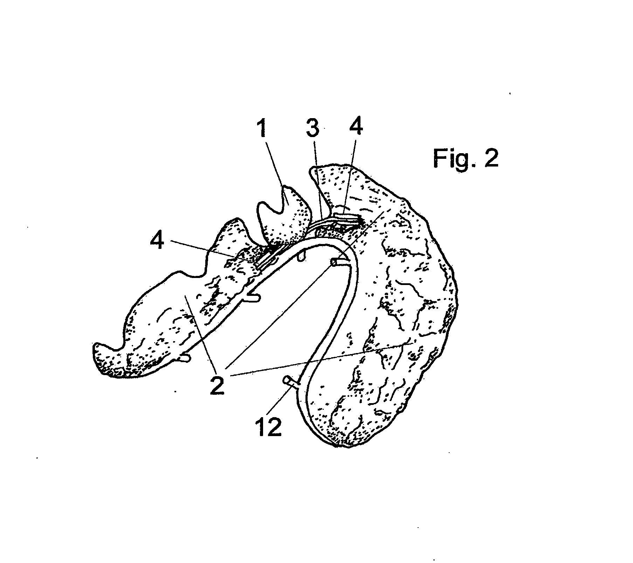

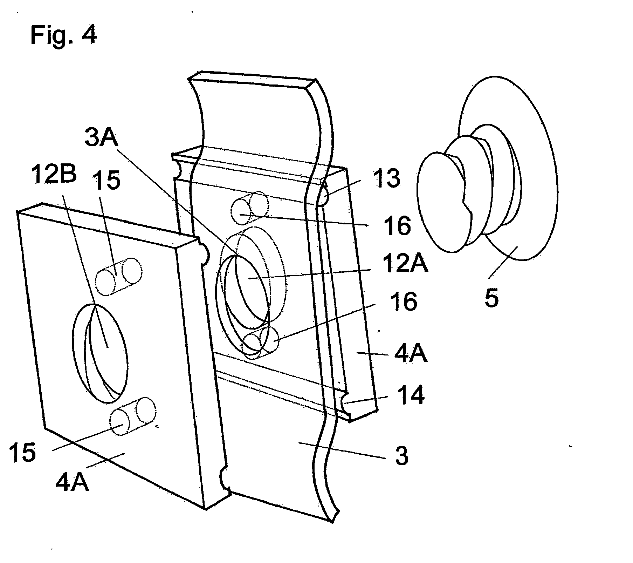

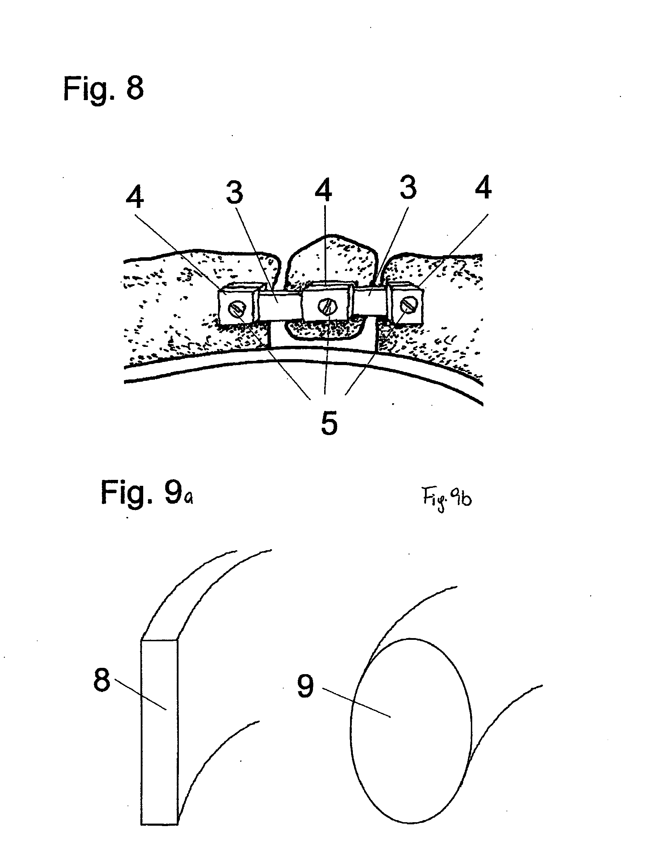

Fig.2 zeigt eine erfindungsgemäße Vorrichtung um diese Fehlstellung zu korrigieren. Die Vorrichtung besteht dabei aus einer Basisverankerung 2, welche im wesentlichen ihrem Design nach einer Negativform des Oberkiefers 2A aus Fig.1 entspricht. Die Basisverankerung 2 kann aus Kunststoff, Metall oder Keramik oder aber aus einer variablen Kombination der angeführten Werkstoffe gefertigt sein. Der Bereich der Fehlstellung 1A ist ausgeschnitten. In diesem freigeschnittenen Bereich der Basisverankerung 2 ist ein Korrekturteil 1 angeordnet, der über elastische Verbindungselemente 3 mit der Basisverankerung 2 verbunden ist. Die Befestigung erfolgt über Klemmplättchen 4 (siehe Fig.4), welche die elastischen Verbindungselemente 3 verschiebesicher zwischen sich klemmen und beispielsweise über eine Schraube 5 (oder Klemmverbindung) zusammengehalten werden. Als elastische Verbindungselemente 3 können Bänder und/oder Fäden (siehe Fig.9) aus einzelnen Polymerwerkstoffen oder variable Kombinationen dieser Werkstoffe zum Einsatz kommen. Selbstverständlich ist es aber prinzipiell möglich, alle möglichen elastischen Materialien zur Herstellung der Bänder bzw. Fäden zu verwenden. Auch Federn aus Nickel-Titanlegierungen oder anderen metallischen Legierungen oder aber aus Kunststoff können verwendet werden.

Die elastischen Verbindungselemente verlaufen mesiodistal, parallel zur äußeren (d.h. bukkalen bzw. labialen) und/oder inneren (palatinalen bzw. lingualen) Kronenoberfläche des oberen und/oder unteren Zahnbogens.

Jeweils eine Hälfte 4A der Klemmplättchen 4 ist an der Basisverankerung 2 befestigt, vorzugsweise einpolymerisiert. Der Korrekturteil 1 hängt somit lediglich durch die elastischen Verbindungselemente 3 gehalten, an der Basisverankerung 2. In seiner Ruhestellung entspricht er der gewünschten Negativform des zu korrigierenden Zahnbestandes in seiner Ziel- bzw. Sollposition. In dieser am Set up eingestellten Ruheposition sind in die erfindungsgemäße Vorrichtung bereits sämtliche erforderlichen Kräfte und Momente zur Bewegung des fehlgestellten Zahnbestandes in die gewünschte Zielposition eingebaut. Zugleich werden in dieser Ruhestellung keinerlei Kräfte oder Momente auf den Korrekturteil ausgeübt.

Es sei an dieser Stelle noch einmal explizit erwähnt, dass das vorliegende Beispiel einen Korrekturteil 1 zeigt, der lediglich einen fehlgestellten Zahn umfasst. Selbstverständlich ist es auch möglich, dass sich der Korrekturteil 1 über mehrere fehlgestellte Zähne oder über Zahngruppen unterschiedlicher Ausdehnung erstreckt. Auch die gleichzeitige Anwendung mehrerer Korrekturteile in einem Zahnbogen ist möglich.

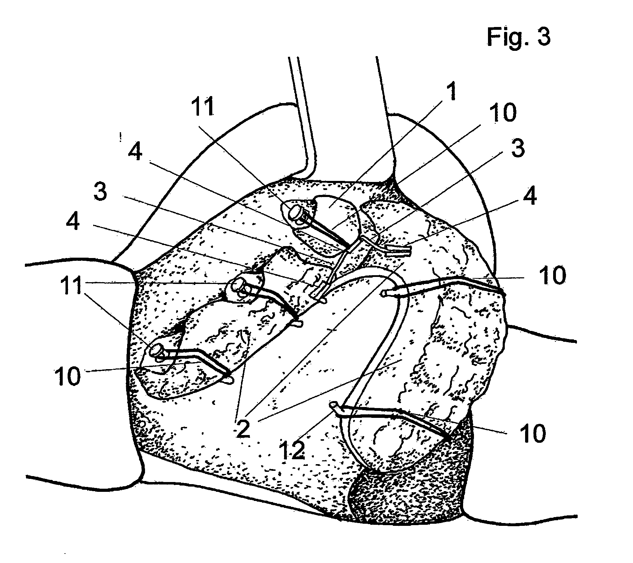

Die erfindungsgemäße Vorrichtung bestehend aus der Basisverankerung 2 und dem mittels elastischer Bänder 3 an der Basisverankerung 2 befestigten Korrekturteil 1 wird dann über jenen Zahnbogen bzw. Kieferteil und bei Bedarf auch über andere verfügbare Areale wie Gaumen oder Alveolarfortsatz gestülpt, welcher den fehlgestellten Zahnbestand aufweist. Im vorliegenden Fall wird die erfindungsgemäße Vorrichtung über den Oberkiefer gestülpt (siehe Fig.3), wobei die Basisverankerung 2 und der Korrekturteil 1 über Dorne 12 mittels elastischer Züge 10 an den Zähnen bzw. an dort befestigten Haltemitteln 11 (Klebeknöpfchen) befestigt sind. Der Korrekturteil 1 wird dabei über den zu korrigierenden Zahn 1A gestülpt. Dazu ist es jedoch erforderlich, den Korrekturteil 1 gegen die Kräfte und Drehmomente der elastischen Verbindungselemente 3 (=Mobilisierungsdehnung) zu bewegen. Befindet sich der Korrekturteil 1 sodann in seiner fixierten Position am Zahn 1A sind die elastischen Verbindungselemente unterschiedlich stark gespannt und versuchen, den Korrekturteil 1 mit den nunmehr aktivierten und eingebauten Kräften und Momenten in die Zielposition wie in Fig.2 ersichtlich, zu bewegen. Auf diese Art und Weise werden auf den fehlgestellten Zahn 1A stete Kräfte bzw. Momente ausgeübt, die simultan in jeder gewünschten Raumdimension eine langsame Bewegung des Zahns in seine Zielposition bewirken.

Befindet sich der Zahn 1A bzw. die zu korrigierenden Zähne nach erfolgreicher Behandlung in der jeweiligen Zielposition, so befinden sich die elastischen Verbindungselemente 3 in Bezug auf den Korrekturteil wieder in einem kräfte- und momentfreien Zustand, das heißt sie üben keinerlei Kräfte oder Momente mehr auf den ehemals fehlgestellten Zahn 1A (bzw. die ehemals fehlgestellten Zähne) aus. Daher ist auch eine unerwünschte Überregulierung bei Nichtbeachtung der Kontrollintervalle ausgeschlossen. Alle Zahnbewegungen verlaufen kontrolliert. Die jeweils applizierten Kräfte und Drehmomente können dosiert und gemessen werden.

Durch die starre Konstruktion der Basisverankerung 2 sowie durch die Einbeziehung aller nichtbewegten Zähne sowie bei Bedarf auch anderer verfügbarer Schleimhaut- bzw. Kieferareale (und bei Bedarf auch von Implantaten) werden alle Nebenwirkungen der Mechanik weitgehend neutralisiert. Auch der Korrekturteil 1 ist eine starre Konstruktion.

Im Anschluß erfolgt nun eine kurze Beschreibung eines Verfahrens zur Herstellung einer erfindungsgemäßen Vorrichtung.

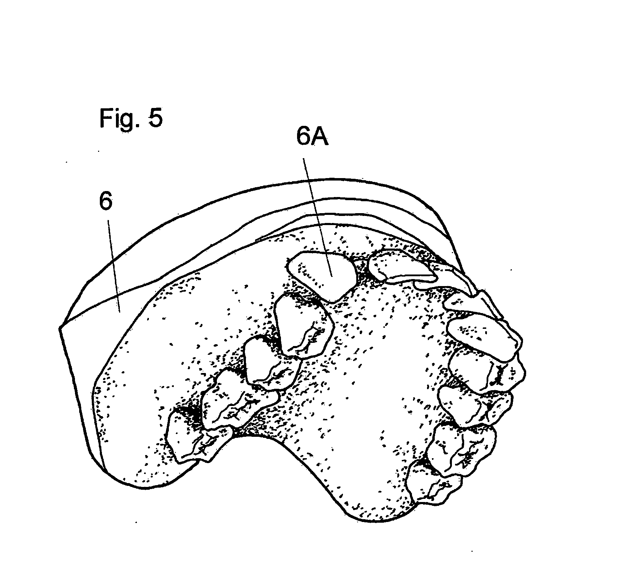

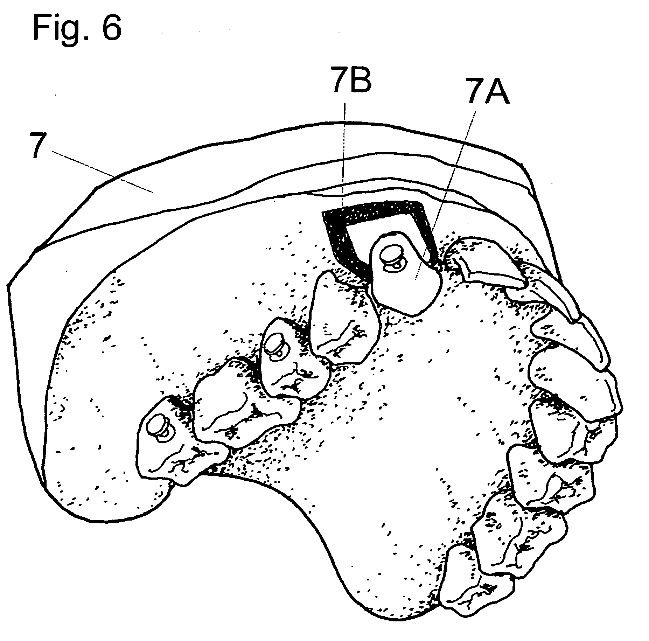

Fig.5 zeigt ein Modell 6 eines Kiefers mit fehlgestelltem Zahnbestand 6A. Ein solches Modell kann mittels herkömmlicher bekannter Methoden wie Gebissabdruck im Mund mit gebräuchlichen Abformmaterialien wie z.B,. Alginat, Silikone oder Elastomeren, etc. und Ausgießen des Abdrucks mit Hartgips erzeugt werden. Anschließend wird das gewonnene Modell mit dem entsprechenden Gegenkiefermodell einartikuliert , d.h. die Bisslage des Patienten wird vom Mund auf die Modelle übertragen. Der Bereich 6A mit fehlgestelltem Zahnbestand wird dann freigeschnitten und in die gewünschte Zielposition 7A gebracht. In dieser Zielposition 7A wird der fehlgestellte Zahnbestand mittels Wachs 7B oder anderen Klebemitteln befestigt. Das so erhaltene Modell wird Set up Modell genannt (siehe Fig.6).

Von diesem bzw. von einem entsprechenden Duplikat des Set up Modells wird sodann eine Negativform angefertigt, die dann die entsprechende Basisverankerung 2 samt Korrekturteil 1 bildet. Basisverankerung 2 und Korrekturteil 1 bilden in diesem Stadium noch einen einzigen Bauteil. Als weiterer Schritt wird dann der Korrekturteil 1, der dem fehlgestellten Zahnbestand entspricht von der Basisverankerung 2 getrennt. In die nun auf dem Set up Modell bzw. dem entsprechenden Duplikat toleranzfrei aufgesetzte Basisverankerung 2 (mesial und distal des zu bewegenden Zahnbestandes) und den Korrekturteil 1 werden nun die in einer Linie ausgerichteten Hälften der Klemmplättchen einpolymerisiert. Anschließend wird der Korrekturteil 1 mittels der weiter oben erwähnten elastischen Bänder und/oder Fäden und/oder Federn 3 und der Klemmplättchen 4 an der Basisverankerung 2 befestigt (siehe Fig.8). Die in dieser Zielposition erfolgte elastische Befestigung des Korrekturteils 1 an der Basisverankerung 2 ist so gewählt, dass vor Behandlungsbeginn sämtliche Kräfte und Momente zur Bewegung des fehlgestellten Zahnbestandes in die gewünschte Endposition in das Gerät eingebaut sind. Auf den Korrekturteil am Set up Modell wirken in dieser Endposition aber keinerlei Kräfte und Momente. Durch geeignete Materialwahl der Bänder, Fäden oder Federn 3 kann die Kraft- und Momentausübung auf den fehlgestellten Zahn bzw. Zahnbestand nach belieben gesteuert und dosiert werden. Ebenso erfolgt dies durch die Wahl des Querschnittes (siehe Fig.8 und 9) der Bänder und/oder Fäden und/oder Federn 3 und durch die Wahl des Spannungs- bzw. Dehnungszustandes derselben.

Wird die fertige Vorrichtung vom Set up Modell oder dessen Duplikat abgenommen, so befindet sich der Korrekturteil in einer frei schwebenden, elastischen Verbindung mit dem Basisteil.

Die fertige Vorrichtung entspricht okklusionsspezifisch einer gnathologischen Schiene und kann im Artikulator therapeutisch in jeder gewünschten Bissrelation zum Gegenkiefer eingeschliffen werden.

Die Klemmplättchen 4 selbst sind vorzugsweise rechteckig oder quadratisch ausgeführt und weisen eine zentrale Bohrung 12 auf, über welche sie mittels Schraube 5 zusammenfügbar und -pressbar sind. Von großer Bedeutung ist die auf die elastischen Verbindungselemente 3 applizierbare Klemmkraft der Klemmplättchen 4. Die elastischen Verbindungselemente 3 dürfen zwischen den Klemmplättchenbacken 4A nicht verrutschen, da sonst keine definierte und gezielte Kraft bzw. Moment auf den fehlgestellten Zahn bzw. Zahnbestand aufgebracht werden kann. Vorteilhafterweise ist daher eine 4A von je zwei zusammengehörenden Klemmplättchenbacken 4A mit zwei Nuten 13 (jeweils eine kurz vor dem mesialen und distalen Ende einer Klemmplättchenbacke) versehen, in welche jeweils ein an der dazugehörenden zweiten Klemmplättchenbacke 4A angeordneter Steg 14 eingreift. Statt zwei Nuten auf einer Klemmplättchenbacke 4A und zwei Stegen auf der anderen Klemmplättchenbacke 4A können auch auf jeder der Backe 4A jeweils eine Nut 13 und ein Steg 14 angeordnet sein, die gegenseitig greifen. Auf diese Art und Weise ist sichergestellt, dass die elastischen Verbindungselemente 3 sicher zwischen den Klemmplättchenbacken 4A festgeklemmt werden. Gleichzeitig ist vorgesehen, dass eine Klemmplättchenbacke 4A zumindest mit mindestens einem Zapfen 15 versehen ist, welcher in eine entsprechende Bohrung 16 am zu dieser Klemmplättchenbacke 4A korrespondierenden Klemmplättchenbacke 4A einführbar ist. Dadurch ist ein exaktes Zusammenführen der Klemmbacken 4A möglich. Der Zapfen 15 ist vorteilhafterweise mesial und/oder distal des Schraubenlochs 12 angeordnet.

Die erfindungsgemäße Vorrichtung ist zur Behandlung aller Arten von Zahnfehlstellungen geeignet und kann bei Bedarf auch mit bereits bestehenden kieferorthopädischen Behandlungsgeräten (z.B. Flex Developer, Herbst Gerät, Kopf-Kinnkappe, etc.) und mit Implantaten beliebig kombiniert werden.

## Patentansprüche

1. Vorrichtung zur Behebung einer Fehlstellung eines mehrerer oder aller Zähne (1A), **dadurch gekennzeichnet, dass** eine Basisverankerung (2) vorgesehen ist, welche mit Ausnahme des fehlgestellten bzw. zu korrigierenden Zahnbestandes (1A), ihrem Design nach im wesentlichen einer Negativform jenes Kieferteils bzw. Zahnbogens entspricht, in welchem sich der fehlgestellte Zahnbestand (1A) befindet und welche über die Zähne dieses Kieferteils stülpbar ist und ein Korrekturteil (1) vorgesehen ist, der seinem Design nach im wesentlichen einer Negativform des zu korrigierenden, fehlgestellten Zahnbestands entspricht und über diesen stülpbar ist, wobei dieser Korrekturteil (1) über elastische Verbindungselemente (3) an der Basisverankerung (2) frei beweglich befestigt ist.

2. Vorrichtung nach Anspruch 1, **dadurch gekennzeichnet, dass** die Basisverankerung (2) und der Korrekturteil (1) aus Kunststoff, Metall oder Keramik oder einer variablen Kombination dieser Materialien gefertigt sind.

3. Vorrichtung nach Anspruch 1 und 2, **dadurch gekennzeichnet, dass** die elastischen Verbindungselemente (3) Bänder und/oder Fäden sind, welche vorzugsweise aus einzelnen Polymerwerkstoffen wie beispielweise Elastomeren oder thermoplastischen Elastomeren oder variablen Kombinationen dieser Materialien gefertigt sind.

4. Vorrichtung nach Anspruch 1 und 2, **dadurch gekennzeichnet, dass** die elastischen Verbindungselemente (3) Federn sind.

5. Vorrichtung nach einem der Ansprüche 1 bis 4, **dadurch gekennzeichnet, dass** die Vorrichtung Klemplättchen (4) aufweist, und die Befestigung der elastischen Verbindungselemente (3) an der Basisverankerung (2) und am Korrekturteil (1) über diese Klemmplättchen (4) erfolgt.

6. Vorrichtung nach Anspruch 5, **dadurch gekennzeichnet, dass** die Klemmplättchen (4) im wesentlichen aus zwei aneinander pressbaren, die elastischen Verbindungselemente zwischen sich fixierenden, Pressbacken (4A) bestehen.

7. Vorrichtung nach Anspruch 6, **dadurch gekennzeichnet, dass** die Pressbacken (4A) mittels einer Schraubverbindung (5) oder einer Klemmverbindung miteinander verbunden sind.

8. Vorrichtung nach Anspruch 1 mit Klemmplättchen (4) zur Fixierung von elastischen Verbindungselementen (3) und zur Befestigung an einer Basisverankerung (2) und einem Korrekturteil (1) dieser Vorrichtung, **dadurch gekennzeichnet, dass** es jeweils zwei Klemmbacken (4A) umfasst, welche aneinander fixierbar sind, wobei jeweils eine Klemmbacke (4A) mindestens eine Nut (13) und vorzugsweise einen Steg (14) aufweist und die jeweils andere Klemmbacke (4A) einen entsprechenden zur Nut (13) korrespondierenden Steg (14) und vorzugsweise eine entsprechend zum Steg (14) entsprechende Nut (13) umfasst, wobei sowohl Nut (13) als auch Steg (14) im wesentlichen quer zur Längsachse des zu klemmenden, elastischen Verbindungselementes (3) angeordnet sind.

9. Vorrichtung nach Anspruch 8, **dadurch gekennzeichnet, dass** die Fixierung der Klemmbacken (4A) mittels einer Schraube (5) oder einer Klemmverbindung erfolgt.

10. Vorrichtung nach Anspruch 8 und 9, **dadurch gekennzeichnet, dass** ein Klemmbacken (4A) mindestens einen Führungszapfen (15) aufweist, welcher in eine entsprechende Bohrung an der korrespondierenden Klemmbacke (4A) einführbar ist.

11. Verfahren zur Herstellung einer Vorrichtung nach Anspruchs 1 zur Behebung einer Fehlstellung eines, mehrerer oder aller Zähne (1A) im Ober- und/oder Unterkiefer, das folgende Schritte umfasst
- zur Verfügung stellen eines Modells (6) eines Kiefers umfassend jenen Kieferteil bzw. jene Kieferteile mit fehlgestelltem Zahnbestand (6A) sowie den entsprechenden Gegenkiefer
- Artikulatormontage beider Kiefermodelle in der gewünschten Bißrelation
- Umstellung (7) des jeweils zu korrigierenden fehlstehenden Zahnbestands im bzw. an den einartikulierten Modell bzw. Modellen in die gewünschte Zielposition bzw. Sollposition (7A) am Modell, vorzugsweise durch Freischneiden des fehlgestellten Zahnbestandes und geändertes Befestigen dieses Zahnbestandes am Modell mittels Wachs (7B) oder anderen Klebemitteln
- vorzugsweise Herstellung eines Duplikates des Set up Modells zur Herstellung einer Negativform des Set up Modells.
- Anfertigen einer Negativform des Set up Modells, umfassend einen als Basisverankerung (2) dienenden Teil, welcher mit Ausnahme des fehlgestellten bzw. zu korrigierenden Zahnbestands, seinem Design nach im wesentlichen der Negativform jenes Kieferteils bzw. Zahnbogens entspricht, in welchem sich der fehlgestellte Zahnbestand befindet und welcher über die Zähne und vorzugsweise auch über andere verfügbare Areale dieses Kieferteils stülpbar ist, sowie einen als Korrekturteil (1) dienenden Teil, der seinem Design nach im wesentlichen der Negativform des zu korrigierenden, fehlgestellten Zahnbestands entspricht und über diesen stülpbar ist
- Ausschneiden jenes Bereichs aus der Negativform, welcher dem zu korrigierenden fehlgestellten Zahnbestand entspricht
- Elastisches Befestigen dieses ausgeschnittenen Bereichs, am verbleibenden Rest der Negativform, wobei während des Befestigungsvorganges sowohl Korrekturteil (1) als auch Basisverankerung (2) am Set Up Modell oder dessen Duplikat im wesentlichen toleranzfrei und unbeweglich aufgesetzt sind.

12. Verfahren nach Anspruch 11, **dadurch gekennzeichnet, dass** das elastische Befestigen mittels elastischer Verbindungselemente, vorzugsweise elastischer Bänder, Fäden oder Federn geschieht.

13. Verfahren nach Anspruch 11 und 12, **dadurch gekennzeichnet, dass** die Kaufläche der Vorrichtung mit einer Beschichtung, vorzugsweise einer Kunststoffbeschichtung versehen wird, um die gewünschte Okklusion einschleifen zu können

14. Verfahren nach einem der Ansprüche 11 bis 13, **dadurch gekennzeichnet, dass** der Korrekturteil (1) an der Kaufläche freigeschliffen wird, um dessen freie Beweglichkeit zu ermöglichen.

## Claims

1. An apparatus for correcting defective positions of one, several or all teeth (1A), **characterized in that** a basic anchoring (2) is provided which with the exception of teeth which are defectively positioned or need to be corrected corresponds according to its configuration substantially to a negative mold of such part of the jaw or dental arch in which the defectively positioned set of teeth (1A) are located and which can be placed over the teeth of this part of the jaw, and a corrective part (1) is provided which according to its design corresponds substantially to a negative mold of the defectively positioned set of teeth to be corrected and can be placed over the same, with said corrective part (1) being fastened in a freely movable fashion to the basic anchoring (2) by means of elastic connection elements (3).

2. An apparatus according to claim 1, **characterized in that** the basic anchoring (2) and the corrective part (1) are made of plastic, metal or ceramics or a variable combination of these materials.

3. An apparatus according to claim 1 and 2, **characterized in that** the elastic connection elements (3) are tapes and/or threads which are preferably made of individual polymer materials such as elastomers or thermoplastic elastomers or variable combinations of such materials.

4. An apparatus according to claim 1 and 2, **characterized in that** the elastic connection elements (3) are springs.

5. An apparatus according to one of the claims 1 to 4, **characterized in that** the apparatus comprises small clamping plates (4) and the fastening of the elastic connection elements (3) to the basic anchoring (2) and the corrective part (1) occurs by means of said small clamping plates (4).

6. An apparatus according to claim 5, **characterized in that** the small clamping plates (4) substantially consist of two clamping jaws (4A) which can be pressed against each other and which fix the elastic connection elements between themselves.

7. An apparatus according to claim 6, **characterized in that** the clamping jaws (4A) are mutually joined by means of a screwed connection (5) or a clamping connection.

8. An apparatus according to claim 1 with a small clamping plate (4) for fixing elastic connection elements (3) and for fastening to a basic anchoring (2) and a corrective part (1) of said apparatus, **characterized in that** it comprises two clamping jaws (4A) each which can be fixed against each other, with one clamping jaw (4A) comprising at least one groove (13) and preferably a web (14) and the respective other clamping jaw (4A) comprising a web (14) corresponding to the groove (13) and preferably a groove (13) corresponding to the web (14), with both groove (13) and web (14) being arranged substantially transversally to the longitudinal axis of the elastic connection element (3) to be clamped.

9. An apparatus according to claim 8, **characterized in that** the fixing of the clamping jaws (4A) occurs by means of a screw (5) or a clamping connection.

10. An apparatus according to claim 8 and 9, **characterized in that** a clamping jaw (4A) comprises at least one guide pin (15) which can be introduced into a respective bore in the corresponding clamping jaw (4A).

11. A method for producing an apparatus according to claim 1 for correcting defective positions of one, several, or all teeth (1A) in the upper and/or lower jaw which comprises the following steps:- providing a model (6) of a jaw, comprising such part(s) of the jaw with the defectively positioned set of teeth (6A) and the respective counter-jaw;- articulated mounting of both jaw models in the desired biting relationship;- conversion (7) of the defectively positioned set of teeth to be corrected in or on the articulated model or models to the desired target position or desired position (7A) on the model, preferably by cutting free the defectively positioned set of teeth and by changed fastening of said set of teeth to the model by means of wax (7B) or other adhesives;- preferably production of a duplicate of the set up model for producing a negative mold of the set up model; - producing a negative mold of the set up model, comprising a part acting as a basic anchoring (2), which part, with the exception of the defectively positioned set of teeth to the corrected, corresponds in its design substantially to the negative mold of such part of the jaw or dental arch in which the defectively positioned set of teeth is located and which can be placed over the teeth and preferably also over other available areas of said part of jaw, and a part acting as a corrective part (1) which according to its design corresponds substantially to the negative mold of the defectively positioned set of teeth to be corrected and can be placed over the same.- cutting out such areas from the negative mold which corresponds to the defectively positioned set of teeth to be corrected; - elastic fastening of said cut-out area to the remainder of the negative mold, with both corrective part (1) and basic anchoring (2) being placed on the set up model or its duplicate in a substantially immobile and tolerance-free way during the fastening process.

12. A method according to claim 11, **characterized in that** the elastic fastening occurs by means of elastic connection elements, preferably elastic tapes, threads or springs.

13. A method according to claim 11 and 12, **characterized in that** the masticatory surface of the apparatus is provided with a coating, preferably a plastic coating, in order to enable the desired occlusion to grind in.

14. A method according to one of the claims 11 to 13, **characterized in that** the corrective part (1) is ground free at the masticatory surface in order to enable its free mobility.

## Revendications

1. Dispositif permettant de corriger les anomalies de position d'une, de plusieurs ou de toutes les dents (1A), **caractérisé en ce qu'**est prévu un ancrage de base (2) qui, à l'exception de la ou des dents (1A) mal positionnées ou qu'il y a lieu de corriger, correspond sensiblement de par sa conception à un négatif de la partie du maxillaire ou du segment dentaire dans lequel se situe la ou les dents (1A) mal positionnées, et qui est apte à coiffer les dents de cette partie de maxillaire et qu'est prévu un élément correcteur (1) qui, de par sa conception, correspond sensiblement à un négatif de la ou des dents mal positionnées qu'il y a lieu de corriger et qui est apte à coiffer celle(s)-ci, cet élément correcteur (1) étant assujetti librement mobile à l'ancrage de base (2) par l'intermédiaire d'attaches élastiques (3).

2. Dispositif selon la revendication 1, **caractérisé en ce que** l'ancrage de base (2) et l'élément correcteur (1) sont réalisés en matière plastique, en métal ou en céramique ou en une combinaison variable de ces matériaux.

3. Dispositif selon la revendication 1 et 2, **caractérisé en ce que** les attaches élastiques (3) sont des rubans et/ou des fils réalisés de préférence en différentes matières polymères telles que les élastomères ou les élastomères thermoplastiques ou en des combinaisons variables de ces matériaux.

4. Dispositif selon la revendication 1 et 2, **caractérisé en ce que** les attaches élastiques (3) sont des ressorts.

5. Dispositif selon l'une quelconque des revendications 1 à 4, **caractérisé en ce que** le dispositif comporte des plaquettes de serrage (4) et que les attaches (3) élastiques sont assujetties à l'ancrage de base (2) et sur l'élément correcteur (1) par l'intermédiaire de ces plaquettes de serrage (4).

6. Dispositif selon la revendication 5, **caractérisé en ce que** les plaquettes de serrage (4) consistent sensiblement en deux mors de compression (4A) aptes à être resserrés l'un contre l'autre, fixant entre eux les attaches élastiques.

7. Dispositif selon la revendication 6, **caractérisé en ce que** les mors de compression (4A) sont reliés entre eux au moyen d'une liaison par vissage (5) ou par serrage.

8. Dispositif selon la revendication 1 avec plaquette de serrage (4) pour fixer des attaches élastiques (3) et destiné à être assujetti à un ancrage de base (2) et à un élément correcteur (1) de ce dispositif, **caractérisé en ce que** la plaquette de serrage comprend deux mors de serrage (4A) respectifs aptes à être fixés l'un sur l'autre, chacun des mors de serrage (4A) comportant au moins une gouttière (13) et de préférence une branche (14) et l'autre mors de serrage (4A) respectif comprenant une branche (14) complémentaire de la gouttière (13) et de préférence une gouttière (13) complémentaire de la branche (14), la gouttière (13) comme la branche (14) étant disposées sensiblement en travers de l'axe longitudinal de l'attache élastique (3) qu'il y a lieu de serrer.

9. Dispositif selon la revendication 8, **caractérisé en ce que** les mors de serrage (4A) sont fixés au moyen d'une vis (5) ou d'une liaison par serrage.

10. Dispositif selon la revendication 8 et 9, **caractérisé en ce qu'**un mors de serrage (4A) comporte au moins un téton de guidage (15) apte à être introduit dans un trou correspondant ménagé dans le mors de serrage (4A) correspondant.

11. Procédé de réalisation d'un dispositif selon la revendication 1, destiné à corriger les anomalies de position d'une, de plusieurs ou de toutes les dents (1A) dans le maxillaire supérieur et/ou inférieur, du type comprenant les étapes suivantes
- on fournit un modèle (6) d'un maxillaire comprenant la ou les parties de maxillaire comportant la ou les dents (6A) mal positionnées ainsi que le maxillaire complémentaire
- on articule les deux modèles de maxillaires de manière à obtenir l'occlusion souhaitée
- on déplace (7) la ou les dents mal positionnées qu'il y a lieu de corriger dans ou sur le ou les modèles articulés dans la position que l'on désire obtenir ou position de consigne (7A) sur le modèle, de préférence en détachant la ou les dents mal positionnées et en les assujettissant différemment sur le modèle au moyen de cire (7B) ou d'autres moyens adhésifs
- on réalise de préférence une reproduction du modèle corrigé en vue de la reproduction en négatif de celui-ci
- on reproduit en négatif le modèle corrigé comprenant une partie faisant office d'ancrage de base (2) qui, à l'exception de la ou des dents mal positionnées ou qu'il y a lieu de corriger, correspond sensiblement de par sa conception au négatif de la partie du maxillaire ou du segment dentaire dans lequel se situe la ou les dents mal positionnées, et qui est apte à coiffer les dents et de préférence aussi d'autres zones disponibles de cette partie du maxillaire, ainsi qu'une partie faisant office d'élément correcteur (1) qui, de par sa conception, correspond sensiblement au négatif de la ou des dents mal positionnées qu'il y a lieu de corriger et qui est apte à coiffer celle(s)-ci
- on découpe du négatif la zone correspondant à la ou aux dents mal positionnées qu'il y a lieu de corriger
- on assujettit élastiquement cette zone découpée sur la partie restante du négatif et on pose sans tolérances pendant l'assujettissement l'élément correcteur (1) comme l'ancrage de base (2) sur le modèle corrigé ou sur sa reproduction de manière à les y immobiliser.

12. Procédé selon la revendication 11, **caractérisé en ce que** l'assujettissement élastique est réalisé au moyen d'attaches, de préférence de rubans élastiques, de fils ou de ressorts.

13. Procédé selon la revendication 11 et 12, **caractérisé en ce que** l'on munit la surface de mastication du dispositif d'un revêtement, de préférence d'un revêtement en matière plastique permettant d'y former l'occlusion souhaitée.

14. Procédé selon l'une quelconque des revendications 11 à 13, **caractérisée en ce que** l'on dégage l'élément correcteur (1) à la hauteur de la surface de mastication pour qu'il soit librement mobile.
